# EUROPEAN PATENT APPLICATION

(11) **EP 1 091 529 A2**
(43) Date of publication of application: **11.04.2001**
(21) Application number: 00402731.4
(22) Date of filing: 04.10.2000
(51) Int. Cl.: H04L 12/56

(54) **Telecommunication network node with multiprotocol capability, method of processing signals and telecommunication network comprising multiprotocol nodes**

(30) Priority: 08.10.1999 IT MI992101; 08.10.1999 IT MI992102
(71) Applicant: ALCATEL, 75008 Paris (FR)
(72) Inventor: Huterer, Mario, 20052 Monza (Milano) (IT); Schweizer, Livia Elena, 20135 Milano (IT)
(74) Representative: Colombo, Stefano Paolo

(57) **Abstract**

A telecommunication network node capable of processing signals transmitted according to different protocols, namely a node with "multiprotocol" capability is described. The node according to the invention is able to combine in an optimum and flexible manner the homogeneous (or strictly shared out among the various types of traffic) payload of the frames coming into it. The node comprises means able to process the received frames and produce, according to the special needs, frames with homogeneous payloads and/or hybrid/multiprotocol payloads shared out in a flexible manner. The node according to the invention avoids the need to construct different networks for each type of transmission (SHD, PDH, IP, ATM, Ethernet, ...). Finally, a novel telecommunication frame and a novel telecommunication network are disclosed.

## Description

The present invention relates to the field of telecommunications and in particular relates to a telecommunication network node (or network element) able to handle signals transmitted according to different protocols i.e. a node with "multiprotocol" capability. The present invention also relates to a new and improved telecommunication SDH (or SONET) network architecture using one or more multiprotocol nodes.

In the field of telecommunications many studies on the evolution of network services and architectures have been carried out. Indeed, those who think that a high growth of the IP (Internet Protocol) traffic will take place, have quickly started to invest in "only-IP" networks. Others are convinced that the contrary is true and do not believe in such a superiority of the internet traffic over the voice or data traffic transmitted in accordance with other known protocols. At any rate, this uncertainly results in a suspicion of the operators who ask themselves what type of network shall be implemented to provide the most profitable services in the most advantageous way from a cost point of view. Another correlated doubt concerns what type of network is able to offer the best scalability as to assure the correct evolution of the network itself with time.

At present it is known to transmit IP, SDH (colored or uncolored), PDH, Ethernet or ATM signals through respective separate IP, SDH, PDH, Ethernet or ATM networks. Therefore, in other words, every node of a given network receives and generally handles SDH frames with homogeneous payload (only IP, only PDH, ...). Network nodes in which the frame payloads are combined in a "strict" manner to obtain a corresponding frame with a payload that substantially results in being "the sum" of the payloads of the various frames are also known. The strictness is due to the fact that the payload part of the combined frame that is dedicated to a certain type of traffic is fixed and therefore the frame is not optimized. In other words, for example, should a stream of ATM cells be transmitted at 10Mb/s, a Virtual Container-3 (VC3) which is able to carry 50Mb/s should necessarily be used (a VC-2, that carries 6Mb/s, would clearly be insufficient): it is easy to understand how 40 Mb/s are unavoidably lost.

In view of such drawbacks, it is the main object of the present invention to provide a telecommunication network node with multiprotocol capability and with complete flexibility, i.e. that is able to manage, in an optimized manner, SDH frames with payload occupied by IP, PDH, ATM, SDH, or any other protocol, traffic and is able to construct "flexible" hybrid frames.

It is a further object of the present invention to provide a "flexible" telecommunication frame wherein its various Virtual Containers are potentially used for transporting any type of signals, SDH, PDH, IP,...

It is still a further object of the present invention to provide an SDH/SONET network architecture capable of managing the transmission in an optimized manner and of simplifying the equipment necessary in particular for transmitting IP (Internet Protocol) traffic.

These and further objects are obtained by a telecommunication network node with multiprotocol capability having the features set forth in the independent claim 1, by a method of processing synchronous signals having the features set forth in claim 6, by a telecommunication frame having the features set forth in claim 9 and by a telecommunication network having the features set forth in claim 10. Further advantageous features of the invention are set forth in the respective dependent claims. All the claims are held to form an integral part of the present description.

In practice, whatever the input frame payload may be, the node according to the invention is able to handle the various signals, terminate or combine them in "hybrid" and "flexible" SDH frames in an optimized manner. In other words, the node according to the invention is able to support all or part of the SDH, ATM, PDH, Ethernet and, above all, IP technologies. Whatever the input to the node may be, the output consists in "hybrid" SDH signals whose payload may consist in ATM, IP, TDM or any other type of traffic, possibly a combination thereof.

In the SDH/SONET network topology according to the present invention, some nodes, namely the core nodes, are for pure transit, some other nodes, namely the peripheral nodes, provide for the add-drop functions.

A detailed description of the invention will be given below by way of a mere and non limiting example, to be read with reference to the attached drawing sheets wherein the various figures show:
- Fig. 1a schematically shows a first embodiment of the modular multiservice node architecture according to the present invention;
- Fig. 1b schematically shows a second embodiment of the modular multiservice node architecture according to the present invention;
- Fig. 2 shows a possible SDH-type frame configuration at the output of a modular multiservice node according to the present invention; and
- Fig. 3 shows the role of multi-service nodes, multi-service gateways and optical level nodes in an "IP over optics" network scenario providing "end-to-end IP" services".

Before describing the node according to the invention, some known concepts in transmission according to the synchronous digital hierarchy (SDH) protocol that are held to be useful in fully understanding the invention will be given. The SDH frames are formed by structures nested at several synchronous multiplex layers whose building blocks are called synchronous Transport Modules (STMs) - level N (N=1, ...) indicating the bit rate (for instance, for STM-1 the corresponding bit rate is 155Mb/s, for STM-16 the bit rate is 2488 Mb/s).

Each STM-N module is composed of a header portion called "Section Overhead" (SOH), containing auxiliary information for management and synchronization, and of a subsequent portion called "Information Payload "containing the information.

This latter is in turn composed of the various hierarchies of the so-called tributary units TU, composed of their overhead part and of "Virtual Containers VC of various hierarchical order (basic orders are VC-11, 12, 21, 22, higher orders are VC-31, 32, ...), these latter being in turn composed of a Path Overhead POH and of a payload proper part containing the information.

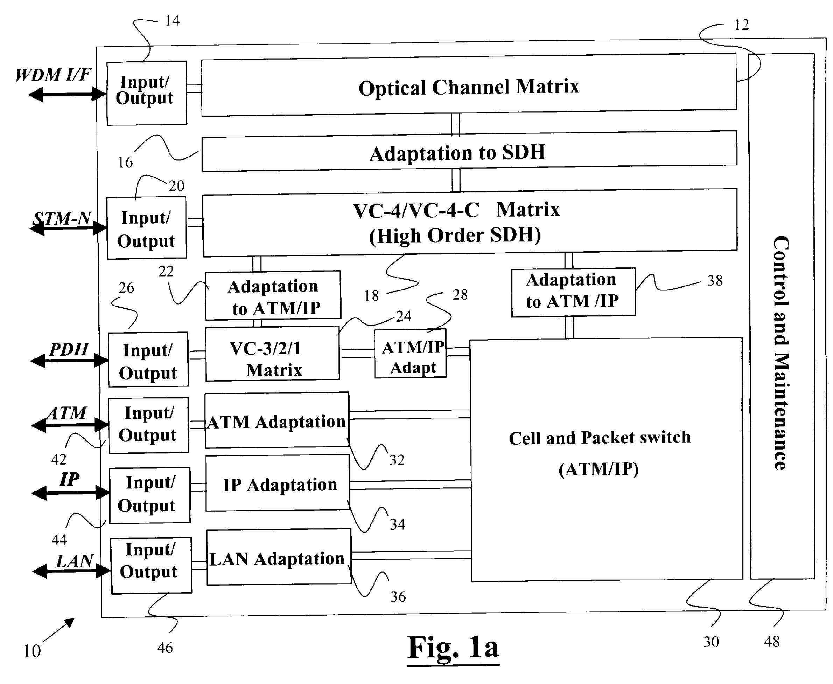

As it will be clear referring to Fig. 1a, the node **10** according to the invention comprises a plurality of elements, with each element being substantially known and standardized, such as:
a) a block **12** comprising an optical matrix for handling signals at a higher level (up to, e.g., 106 Gbps). Block **12** receives the signals to be handled from an input/output block **14** and outputs the handled signals from such a block **14** itself. Possibly, the signals handled by block **12** could come from a first adaptation block **16** to be mentioned below;
b) a first adaptation block **16** that adapts the high-level signals with lower-level signals and *vice versa;*
c) a block **18** comprising a matrix for handling electrical signals, hence at a lower level than those handled by block **12** (for example up to 140 Mbps). Block **18** receives the signals to be handled from block **12** (through the first adaptation block **16**), from an input/output block **20** or from the second adaptation block **22** or from a fourth adaptation block **38**.
d) a second adaptation block **22** connected with block **18** to adapt signals coming out of (or coming into) block **18** towards (or from) a block **24**, block **24** comprising a matrix for handling low-level signals;
e) a block **24** comprising a matrix for handling low-level electrical signals (VC-3/2/1). Block **24** is connected to an input/output block **26** that receives/outputs PDH signals. Block **24** sends signals to (or receives signals from) a third adaptation block **28** for adapting ATM/IP signals;
f) a block **30** for switching ATM cells and IP packets. It is able to handle ATM, IP or Ethernet (LAN) signals passed through suitable respective adaptation blocks **28**, **32**, **34**, **36**. The output from such a block may consist in low-level signals or may consist in higher-level signals (by passing the signal through a fourth adaptation block **38**). Each of the adaptation blocks **32-36** is connected to a respective one of input/output blocks 42-46, which blocks **42-46** receive/output respective ATM, IP and LAN signals;
g) a control and maintenance block **48** that controls the correct operation of the node and optimizes the output thereof. Although not shown, block **48** is connected with a network manager that controls and monitors the operation of a telecommunication network comprising several nodes.

The centralized control and maintenance block **48** is an important feature of the present invention. It allows for a better (namely, a more efficient) management of Client Layer requests to the Server Layer. In the arrangements according to the prior art, based on a plurality of apparatuses, instead of the multi-protocol apparatus according to the present invention, several corresponding controllers were used. Furthermore, the various and separate apparatuses of the prior art could be of different type and possibly come from different manufacturers. This resulted in the need to specify protocols and providing interfaces in order to provide the various apparatuses with the possibility to communicate each other. All such drawbacks are solved by the centralized controller $8 of the invention which perfectly knows the requirements of Client Layers and manages them accordingly.

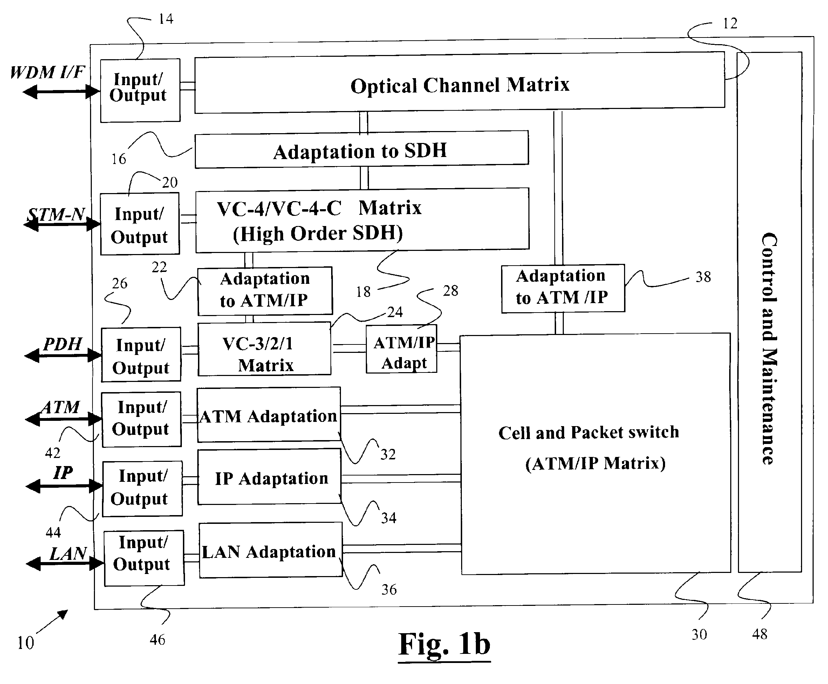

Fig. 1b differs from Fig. 1a due to a direct passage from the Optical Channel Matrix (**12**) to ATM/IP Adaptation block **38**. Finally, while not shown in any of the figures, the Control and Maintenance block **48** could be also placed out of the main box but it should maintain the centralized control of all the blocks inside the main box.

The person skilled in the art, in view of the detailed description of the blocks forming the node according to the invention, will be able to realize the node itself since the blocks are individually well known, as well as the various interfaces between the various blocks are known too. In particular, the way of organizing the control of variable boundaries between the individual parts forming the hybrid frame is apparent to a person skilled in the art, the manner of operating/implementing the SDH network management function being known. In particular, the network management function determines the positioning of the boundaries according to a level analysis of the various traffic components.

As will be clear at this point, the node according to the invention can receive at its input any type of signal (WDM I/F, STM-N, PDH, ATM, IP, LAN) and handle it in a suitable manner. The various input signals are thus handled to emit an SDH or WDM/OTN signal whose payload could be formed by one type of signal only (e.g. only IP) but it will conveniently be composed of a combination of signals transmitted according to different protocols.

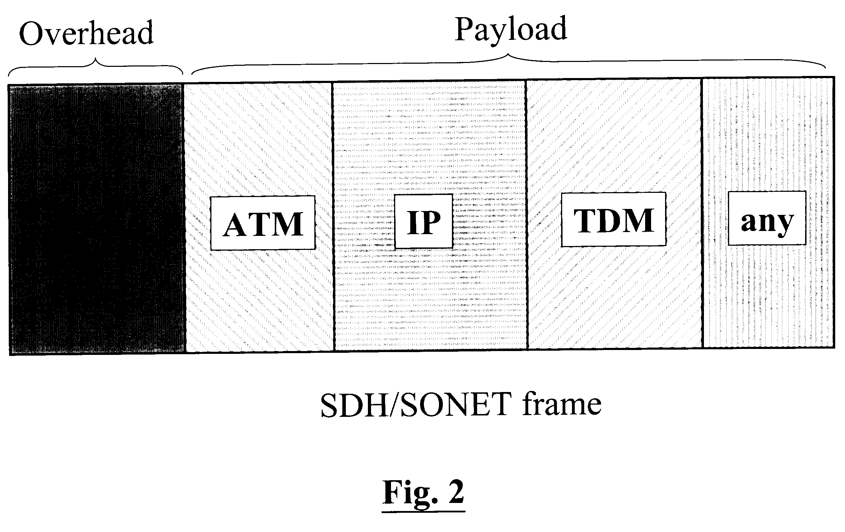

In Fig. 2, this second situation is just shown: a first portion of the SDH frame payload is occupied by ATM signals, a second portion by signals transmitted according to the IP protocol, a third portion by TDM signals while the last portion (indicated as "Any") is occupied by any other type of signal. Naturally, the illustrated arrangement represents just one of the possible numberless combinations. The versatility of the invention also lies in that the "boundaries" of the individual parts are fully variable and are defined only by the control block **48** and/or by the network manager (not shown). This means that the SDH frame payload of the output signal will be exploited at best, namely it will be always completely filled. It should be understand that "frame portion" means "Virtual Container" (VCs). In other words, should the particular and exemplifying frame of Fig. 2, be an SDH STM-n, the frame portion occupied by ATM signals is one or more VCs. The same applies for IP, TDM and "Any" signals.

Should the transmission be at optical level, namely based on multiple wavelengths (λ₁, **λ**₂, ..., λₙ), an alternative/addition to the "hybrid" filling of the payload of an SDH frame, consists in a solution wherein associated with each λ is an hybrid frame (for instance a frame with a payload similar to that of Fig. 2 is associated with λ₁) or a special type of protocol (for instance the only IP signal is associated with λ₂, the only PDH signal with λ₃, etc...).

In a further alternative to the proposed solution, it is provided for associating the destination address of the SDH frame with each λ (for instance, a first destination is associated with λ₁, a second destination with λ₂, etc...): a solution of this type would simplify the management and the addressing of the SDH frames.

It is clear that the node in accordance with the invention features all (or at least part of) the functionalities of conventional nodes such as pure transit, termination, add or drop.

The present invention further provides a new telecommunication network topology comprising one or more multiservice nodes. In accordance with the present invention, some nodes of an SDH/SONET network, typically the busiest ones, are considered as pure transit nodes and they do not perform for instance any add-drop function. Nodes of this type are termed "core nodes" because they pertain to a so-called optical backbone or optical core. For example, in accordance with the present invention, the core nodes could conveniently be (possibly optical) cross connects (OXCs) or pure giga/tetra routers.

The fact that the core nodes carry out pure transit only, or that they have not the so-called all packed level functionality is clearly very important from a cost and network scalability standpoint.

Outside the core, the present invention considers a further area, conventionally called "Edge Of Core" by analogy. The nodes present in this area are Multi-Service Gateways (MSGs) capable of managing signals both at optical level and at electrical level, i.e. nodes provided with SDH, ATM, IP and WDM matrices. Hence, the nodes in this area are capable of performing all possible typical functions of a node like e.g. the add-drop ones.

An equipment (MSG) according to the requirements of the present invention could be the above described multi-protocol node.

Outside the Edge-Of-Core area, there are other nodes which can be of the Multi-Service Gateway (MSG) type or they can be Multi-Service Nodes (MSNs) that do not have the possibility of managing optical level signals but only lower (electrical) level signals.

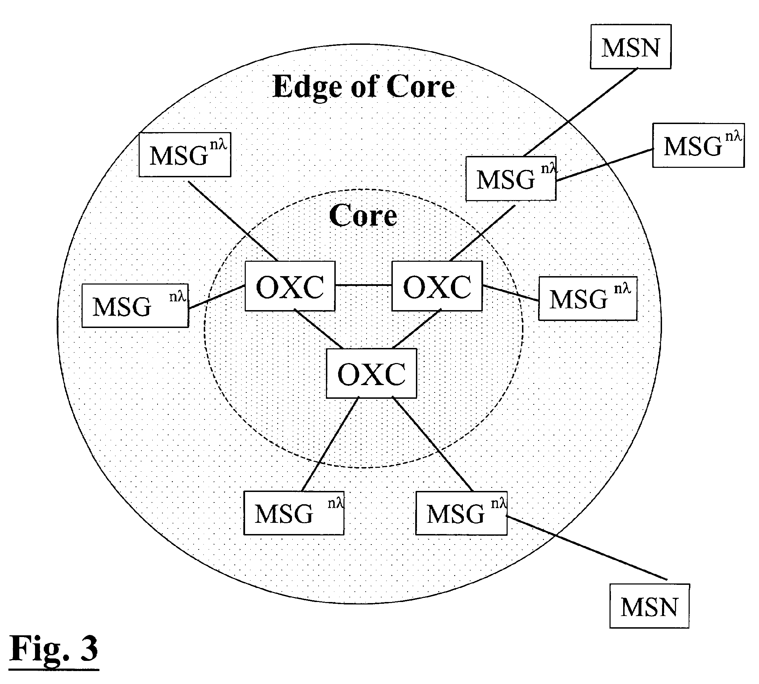

As mentioned above, as far as the multi-service gateways are concerned, the multi-wavelength (λ₁, λ₂, λ₃, ... λₙ) optical level transmission can also be provided (thus "n" in Fig. 3 corresponds to an integer greater than or equal to one). The present invention provides for associating the destination address of the SDH/SONET frame with each wavelength (λ) (for instance a first destination is associated with λ₁, a second destination with λ₂, and so on): a solution of this type simplifies the management and the addressing of the SDH/SONET frames to a large extent.

The interfacing between the edge-of-core nodes and the core nodes can be of any known type. In point of fact, with a multi-wavelength solution wherein to each wavelength there corresponds a certain destination, the interfacing could also be of physical type. In other words, a dedicated input port corresponding to a special output port could be provided for each wavelength.

It should be clear that putting WDM/SDH/ATM/IP capabilities in one single box allows to synchronize the restoration mechanisms of each layer, thus achieving fast restoration. There are several issues to consider, comprising the following.

If the Client Layer uses server signals to detect a failure (e.g. a fiber cut) and reacts immediately, this may result in unstable situations if the server layer in turn tries to restore the connection. Nowadays, timers are used in order to separate both the restoration mechanisms.

If the Client Layer uses only Client signals to detect the failure, there might be a delay in detecting the outage before reacting. Again, if the Client Layer is faster than the server layer in its mechanisms this can result in a unstable situation.

Multilayer mechanisms can even share bandwidth for protection issues. E.g. there are some high available circuits protected at SDH level and other circuits are protected at client level (ATM or IP). Since normally the protecting bandwidth is not used by SDH protection it can be used by client layer mechanisms for the time period of a fiber cut.

If the client layer is controlled independently from the server layer, the timeout dimensioning is critical. If the timeout is too less then each slowdown of protection in the server layer can produce above effects. If the timeout is very big, each improvement in the Server Layer does not affect the client until the operator manually readjust the timeout. This results in an operational overhead.

A unified hardware allows to synchronize the protection mechanisms without timeout by starting the protection beginning on the client layer without initiating Client Layer protection - or *vice versa* if desired.

While the present invention has been described with specific reference to SDH signals and or SONET signals, this should not be interpreted as a limitation. Indeed, the present invention equally applies to any other synchronous signal and thus the description should be red under this view. In other words, "SDH", "SONET" or "SDH/SONET" should be interpreted in a wider sense in order to include any synchronous or asynchronous signal.

There have thus been shown and described a novel telecommunication network node, a novel telecommunication frame and a novel telecommunication network topology which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Telecommunication network node (**10**) for the handling of signal frames, said frames comprising a payload portion containing the information, said payload of each received frame being homogeneous or strictly distributed among the various types of traffic, characterized in that it comprises means (**12-48**) able to process the received frame and produce, according to the special requirement, frames with both an homogeneous payload and/or hybrid/multiprotocol payload distributed in a flexible manner.

2. Node (**10**) according to claim 1, characterized in that control and maintenance means (**48**) are provided for optimizing the flexible hybrid payloads so as to reserve a part thereof, having variable dimension, for a determined protocol (LAN, IP, ATM, PDH, STM-N, WDM I/F).

3. Node (**10**) according to claim 1, characterized in that it comprises means (**12**) for handling multi-wavelength (λ₁, **λ**₂, .., λₙ) optical level signals, a determined protocol (LAN, IP, ATM, PDH, STM-N, WDM I/F) being associated with a special wavelength (λₓ) of each flexible hybrid frame.

4. Node (**10**) according to claim 1, characterized in that it comprises means (**12**) for handling multi-wavelength (λ₁, λ₂, .., λₙ) optical level signals, a special destination being associated with a special wavelength (λₓ) of each flexible hybrid frame.

5. Node (**10**) according to any of claims 1 to 4, characterized in that it comprises:
- input/output means (**14**, **20**, **26**, **42**, **44**, **46**);
- means (**18**, **24**) for handling SDH frames at electrical level;
- ATM switching means (**30**) with IP router functions; and
- adaptation means (**16**, **22**, **28**, **32-38**) for the adaptation of the frames/cells.

6. Method of processing signals at a telecommunication network node (**10**), said node (**10**) being able to receive frames with homogeneous payload or payload strictly distributed among the various types of traffic, characterized by the step of processing through suitable means (**12**, **48**) the received homogeneous or strictly distributed payloads and combining the payloads in such a way as to produce, according to the special requirement, homogeneous or hybrid/multiprotocol flexible payloads.

7. Method according to claim 6, characterized by processing multi-wavelength (λ₁, λ₂, .., λₙ) optical level signals, a determined protocol (LAN, IP, ATM, PDH, STM-N, WDM I/F) being associated with a certain wavelength (λₓ) of each flexible hybrid/multiprotocol frame.

8. Method according to claim 6, characterized by processing the multi-wavelength (λ₁, λ₂, .., λₙ) optical level signals, a special destination being associated with a certain wavelength (λₓ) of each flexible hybrid/multiprotocol frame.

9. Telecommunication signal frame, the frame comprising a Section Overhead (SOH) and an Information Payload (PAYLOAD) containing the signal information, the Information Payload comprising a plurality of Virtual Containers, characterized in that the Information Payload is non-homogeneous, the type of signal transported by at least one Virtual Container being different from the type of signal transported by the rest of Virtual Containers.

10. Telecommunication network comprising a plurality of nodes (OXC, MSG, MSN), characterized in that a first part (OXC) of said nodes, pertaining to a first area (Core) of the network, are pure transit nodes while a second part (MSG) of said nodes, pertaining to a second area (Edge of Core) of the network, peripheral with respect to the first area, are nodes with full capability of add-drop and of other typical node functions having the possibility of managing signals both at electrical and optical level.

11. Network according to claim 10, characterized in that a third part (MSG, MSN) of said nodes, pertaining to a third area, peripheral with respect to the second area, are nodes with full capability of add-drop and of other typical node functions having the possibility of managing signals either at electrical level only (MSN nodes) or both at electrical and optical levels (MSG nodes).

12. Network according to claim 10 or 11, characterized in that the nodes (MSG) capable of managing signals both at electrical and at optical level are able to manage signals at multi-wavelength (λ₁,λ₂,λ₃, ... λₙ) optical level, a special destination being associated with a special wavelength (λ₁) of each SDH/SONET frame coming out from the node.

13. Network according to claim 12, characterized in that the nodes (OXC) of said first part comprise physical interfaces wherein a special wavelength (λₓ) and therefore a special destination corresponds to each input/output port.

14. Network according to any of claims 10-13, characterized in that said nodes (MSG) of the second (Edge of Core) area are for the handling of the SDH/SONET signal frames, said frames comprising a payload portion containing the information, said payload of each received frame being homogeneous or strictly shared out among the various types of traffic, said nodes (MSG) comprising means able to process the received frames and produce, according to the special requirement, frames with homogeneous payloads and/or hybrid/multi-protocol payloads distributed in a flexible manner.

15. Network according to any of claims 10-14, characterized in that said nodes (OXC) of the first area are high traffic nodes.
